# EUROPEAN PATENT APPLICATION

(11) **EP 3 403 515 A1**
(43) Date of publication of application: **21.11.2018**
(21) Application number: 18172015.2
(22) Date of filing: 14.05.2018
(51) Int. Cl.: A23L 29/10, A23L 33/10

(54) **FOOD FAT COMPONENT, ITS PRODUCTION METHOD AND ITS USES**

(30) Priority: 12.05.2017 FI 20175435
(71) Applicant: Myllyn Paras Finland Oy, 05801 Hyvinkää (FI)
(72) Inventor: PETÄJÄ, Pasi, 02760 Espoo (FI)
(74) Representative: Seppo Laine Oy

(57) **Abstract**

The present invention relates to a food fat component which is capable of preventing oxidation of fatty acids and simultaneously improving both the nutritional profile and organoleptic properties of the product. The invention also relates to a method suitable for the production of such a product, as well as products in which this component has been utilized. In said invention, prevention of oxidation of fatty acids is based on a physical barrier and antioxidants optionally comprised in the ingredients. This kind of food fat component is suitable for a variety of applications. It can be utilized, among other things, in hamburger patties, chocolate masses and pasties, and is furthermore suitable for pharmaceutical and cosmetics industry to improve the compositions of the products.

## Description

### Background of the invention

### Field of the invention

The present invention relates to a food fat component which is capable of preventing oxidation of fatty acids and simultaneously improving both the nutritional profile and organoleptic properties of the product. The invention also relates to a method suitable for the production of such a product, as well as products prepared by using this method.

This kind of food fat component is suitable for a variety of applications. It can be utilized, among other things, in hamburger patties, chocolate masses and pasties, and it is additionally suitable for pharmaceutical and cosmetics industry to improve the compositions of the products.

### Description of related art

Oxidation of unsaturated fatty acids at room temperature or in frozen storage, processing and various cooking processes is a generally known adverse process. In particular, the fatty acids contained in oils are oxidized in the treatment, regardless of whether they are in triglyceride form or as free fatty acids. In general, attempts to prevent detrimental oxidation are carried out by excluding oxygen from the production process, by using lower process and storage temperatures, and by using oxidation-preventing antioxidants.

Various compounds, such as volatile compounds, are formed in the oxidation process. In addition, other secondary compounds are formed, some of which have been proven to be toxic compounds, such as 4-hydroxy alkenals. Among these, 4-hydroxy-2-nonenal (4-HNE) has been shown to be cytotoxic and mutagenic, and it has been associated with various diseases such as atherosclerosis, Alzheimer's disease and various cancers (Csallany et al. 2015). 4-HNE is formed especially during oxidation of omega-6 fatty acids, the proportion of which is often high in oils containing polyunsaturated fatty acids.
In particular, essential beneficial unsaturated fatty acids are destroyed upon oxidation of fats, because they are the most sensitive ones to become oxidized due to the presence of double bonds. The unfavorable, nutritional impact of saturated fatty acids is accentuated with the decrease in the amount of unsaturated fatty acids. Oxidation of fats also results in the oxidation of fat-soluble vitamins and sterols, whereby compounds detrimental for health are formed, especially in the case of sterols (Khan et al. 2015).

The compounds formed in the oxidation process react with other components of the food, mainly vitamins and proteins (Wasowicz et al. 2004). This may lower the biological activity of vitamins and proteins, in which case they can no longer be nutritionally utilized by the body. Furthermore, oxidation of fatty acids brings about decomposition of primary flavor compounds and formation of new flavor compounds, resulting in lowering of the organoleptic quality of the food (Frankel 2012).

The degree of oxidation is typically measured by determining the peroxide value. The peroxide value measures the level of primary oxidation products, *i.e.* peroxides, formed upon oxidation of fats in the sample. In fresh oil, the peroxide values are usually below 10 meq/kg. An increased peroxide value of approx. 30 to 40 meq/kg indicates that the oil has turned rancid, which is also detected organoleptically.

A known method used for the protection of soluble fats is microencapsulation. It can be utilized *e.g.* in the food industry to protect ingredients that are sensitive to light, oxygen and decomposition caused by free radicals (Shahidi et al. 1993). The capsules are typically produced by spray-drying oil-in-water emulsions comprising carbohydrates and/or proteins, which form a protective layer into the final product. Microencapsulation converts the oils into powder-like solids that are easy to handle, and protects them against oxidation by virtue of a solid "wall" which forms a physical barrier preventing the diffusion of oxygen to the lipids. Spray-dried microencapsulated oils can thus be used to improve the nutritional quality of foods, *e.g.* with polyunsaturated fatty acids (Velasco et al. 2009).

In studies investigating the effect of microencapsulation on the oxidation of oils containing polyunsaturated fatty acids, pure substances or mixtures thereof have often been used, *e.g.* maltodextrin, gum arabic (Watanabe et al. 2002) or whey protein concentrate (Jimenez et al. 2004), or combinations thereof (Carneiro et al. 2013). Starches from natural sources used in the encapsulation include various different starches, pectin, chitosan, gum arabic and alginates. Carbohydrate alone cannot be used as surface material as carbohydrates do not possess emulsifying properties (Kagami et al. 2003). By adding them, the drying properties of the surface material can nevertheless be improved.

Oat bran has also been used for microencapsulation (Laine et al. 2013), but it was modified by acid treatment (deamidation) in order to improve its emulsifying properties. Upon deamidation some of the glutamine amino acids are converted into glutamic acids, increasing the negative charge of the protein and thus the protein-water interactions, further increasing their solubility and surface activity. Besides oats, separate emulsifiers (mono- and diglycerides, soy lecithin) and stabilizers (xanthan gum, guar gum, carrageenan) have been used in commercial products having an emulsion structure. Emulsions prepared from oat beta-glucan in combination with Tween emulsifier or egg white (20 % oil) have been investigated in some studies (Santipanichwong et al. 2009).

Oxidation of fats can also be slowed down by using synthetic antioxidants or antioxidants isolated from natural substances. Antioxidants prevent the formation of harmful oxygen compounds, or convert them into a harmless form. For instance, rapeseed oil is high in vitamin E (α-tocopherol) and γ-tocopherol, both acting as antioxidants. γ-tocopherol has been shown to function more effectively than α-tocopherol against platelet aggregation and LDL oxidation as well as detain intra-arterial thrombosis (Li et al. 1999, Saldeen et al. 1999).

Described in patent application WO2016133411 (A1) is a method allowing the production of microencapsulated fish oil that contains health-promoting EPA and DHA fatty acids. In the method, an oil-in-water emulsion is prepared by mixing the oil and a mixture of emulsifiers with each other, and drying the emulsion by spray-drying. Of the dry weight of the product manufactured by the method, 15 to 20 % is fish oil and 80 to 85 % unmodified polysaccharides. The invention described in the method improves the nutritional profile of the food.

Patent RU2557526 (C1) discloses a method for improving the organoleptic properties of fish oil through microencapsulation of the oil by formation of an emulsion and drying it by spray-drying. Modified starch is used as the encapsulating material. The invention can be used to improve the nutritional profile of food products such as milk and bakery products without the fish oil degrading the organoleptic properties of the product.

Patent application CN102742674 (A) describes a method for preparing palm kernel oil in powder form. In encapsulation, use is made of modified starch and cane sugar, and the core consists of refined palm kernel oil. The encapsulated oil can be used in ice creams, coffee, bread, cakes and other food products. In addition, it can be used as substitute for milk powder, and it is capable of improving the color, aroma, taste and nutritional quality of the product. Refined palm kernel oil consists mainly of saturated fatty acids, and its abundant use in diet is not recommended (U.S. Department of Health and Human Services 2015).

Patent FI119751 discloses a method for producing oatmeal which is easier to handle and better preserved, by using extrusion. The method is based on disruption of starch granules in oatmeal mechanically and by heat treatment, resulting in the formation of a plastic mass. The disrupted starch granules serve as a binder to which the lipids contained in oat flour bind forming a complex that protects the lipids from oxidation. Extruded oatmeal binds added fat into itself.

High preservability of organoleptic properties is important for the acceptability of food products. In many cases, increasing preservability by decreasing water or its activity has a positive effect on preservability, but at the same time the freshness and succulence properties of the product are reduced, which is a problem in prior art solutions. The appearance of the products is one of the important factors affecting the organoleptic properties of the food and could in fact be improved in several product groups. Too often, the appearance of products manufactured by using heat treatment is ignored, especially in the case of orally consumed products. A more succulent appearance in the products is especially called for in baking of the oven and griddle type.

Furthermore, in known fatty acid microencapsulation methods, fat encapsulation is most often done by adding stabilizing or emulsifying agents.

### Summary of the invention

The present invention is defined in the independent claims. Certain embodiments are defined in the dependent claims.

According to a first aspect the present invention relates to a food fat component which is capable to prevent oxidation of fatty acids.

According to a second aspect the present invention relates to a product in which the food fat component as described above has been used to simultaneously improve the nutritional profile and organoleptic properties, such as succulence and appearance.

According to a third aspect the present invention relates to a method for the production of the food fat component or product as described above.

According to a fourth aspect the present invention relates to the use of a food fat component or product according to the invention.

The method according to the invention and the component produced by the method allows the protection of soluble fat against oxidation. In said invention the prevention of oxidation of fatty acids is based on a physical barrier and antioxidants optionally contained in the ingredients. The method of the invention allows the preservation of the nutritional quality of soluble fats as well as the prevention of primary oxidation and hence preferably improvement of the quality of fatty acids in the products compared with normal orally consumed products containing soluble fat.

By using the invention, the fat content of the component or product can be maintained during cooking, which improves both the health-related and organoleptic properties of the product. The invention enables adjustment of the amount of health-promoting fatty acids as well as improvement of the fatty profile of the product without a greasy mouthfeel.

The invention is based on the idea that after the addition of protein and biomaterial (optionally also addition of electrolyte) to the oil-in-water mixture the fatty acids contained in the fat are bound by means of a mechanical treatment and assisted by the proteins into small particles, whereupon the proteins and the active chains of their amino acids are via their affinities and partly via interatomic bonds conforted onto the surface of the particles. Also other biomaterial may be added to the mixture, after which the mixture is dehydrated, whereupon a finished food fat component is formed. In this way the oil and fatty acids have been rendered into stable protected structures, *i.e.* the fat remains in the product without detaching and causing an unpleasant mouthfeel. With the decrease of water as a result of dehydration, the preservability is enhanced and oxidation of fats can simultaneously be reduced.

Several benefits are achieved with the present invention. Firstly, the invention facilitates industrial production and provides added and novelty value to the use of soluble fats in industrial processes and in connection with the use of products containing the component described by the invention, improving the preservability and enjoyableness of the product.

Simultaneously with an improvement in the nutritional profile of the product, the component according to the invention allows provision of succulence to the product, and its preservability, in particular fresh preservability, can be enhanced. By adding to the mixture in the step of production of the component cereal flour, semolina or flakes (such as wheat, barley, rye, oats, spelt, millet, maize, rice or sorghum); pseudocereal flour, semolina or flakes (such as buckwheat, amaranth or quinoa); legumes (soybeans, peas, chickpeas, beans, lentils, lupines); field beans or animal-derived protein sources (insects, seafood, chordates, mammals, fungi, algae, molds) the nutritional value can be enhanced also in products which conventionally do not contain nutritionally beneficial nutrients, such as fibers or enough protein.

In addition to the nutritional and preservability properties, the organoleptic properties of the products prepared by the method of the present invention will be better maintained. The products obtained will be more juicy and succulent, whereby the products will not dry up so quickly during storage. In addition, their appearance after baking is more attractive and roasty. Owing to succulence, the taste also improves compared with traditional products, and the feeling of satiety caused by the products increases. In the product, the component achieves favorable properties especially in the manufacture of the final product and in connection with cooking or heating.

In the Maillard reaction, amino acids of proteins react with carbohydrates at a high temperature, forming various colorants and flavor compounds that provide baked products with a characteristic color and flavor. In particular, when the component comprises carbohydrate-based biomaterial, more appealing properties upon baking the final product are achieved via the Maillard reaction into products in which the Maillard reaction typically does not occur to a similar extent.

By adding the component to, for example, different types of fat-based laminated doughs, succulent, high-quality, more durable products that are more appealing in their organoleptic properties are achieved. Similarly, extension of succulence preservation time and shelf-life in general can be observed for other baked goods. In addition to baked goods, the food fat component is also suitable for other food products, such as meat products.

Other features achieved with the component according to the invention include also an improvement in water-binding capacity in the products during baking, whereby weight loss can be reduced. For instance, reductions of 2 to 20 % in weight loss of products made from meat ingredients have been obtained compared with the normal situation. Furthermore, by using the invention the products maintain their shape better and handling is improved, as the component according to the invention comprised therein increases the elasticity of the product. The products become more appealing in their appearance, as the component provides various heat-treated products with a deeper-colored frying surface and more easily produces a matured and delicious appearance.

The products utilizing the component of the invention generally tolerate storage, handling and baking processing and heating better than those in which oil or fats or other ingredients of the component of the invention are added individually at the manufacturing stage of the product.

### Embodiments

The present invention relates to a food fat component which is capable to prevent oxidation of fatty acids and thereby improve the nutritional and organoleptic properties of the product.

Typically this food fat component comprises 10 to 70 weight-% oil fat, 10 to 70 weight-% biomaterial and 1 to 40 weight-%, preferably 1 to 30 weight-% protein. In addition, the component comprises water and optionally an electrolyte. For example salts can be used as electrolytes. Water can be in the form of pure water or some other aqueous liquid. Milk and vegetable and fruit juices are liquids typically suitable for this purpose.

According to a preferred embodiment the moisture of a finished food fat component is typically 0.1 to 15 weight-%. Appropriate moisture can have a reducing effect on the oxidation of fatty acids. In addition, its advantages include, for example, non-dustiness and fluidity of the food fat component during use.

As biomaterial in the production of the food fat component, use is typically made of carbohydrate-containing material, but also biomaterial containing proteins and fats. As examples, mention can be made of cereal flours, semolina or flakes (such as wheat, barley, rye, oats, spelt, millet, maize, rice or sorghum); pseudocereal flours, semolina or flakes (such as buckwheat, amaranth or quinoa); legumes (soybeans, peas, chickpeas, beans, lentils, lupines) or field beans. The ingredients of the component form an oil-in-water emulsion, in which protein and biomaterial form, as a result of intensive homogenizing, a stable structure on the interfaces of the emulsion. By dehydrating the emulsion, a powder-like solid material is obtained.

Any fat which at least upon heating is oil-like is suitable as the oil fat for use in the present invention. In fact, various different fats or lipid compounds can be used for the production of the component according to the invention, *i.e.* by using the method, different fat profiles can be generated for various orally consumed fat-containing biomatrices. As oil fat, use is typically made of vegetable fat or oil, such a s rapeseed or palm oil, shea butter, or a combination of these. Omega fatty acids are particularly beneficial.

Protein sources used in the invention are not restricted. Any protein obtainable from living organisms can be used in the invention (such as the flours, semolina and flakes). According to a preferred embodiment, encapsulation of fat is performed without added stabilizing or emulsifying agents, in contrast to several already patented fatty acid microencapsulation methods. The protein source used preferably serves itself as emulsifier, such as in the case of egg. According to a preferred embodiment, the protein used is a protein contained in egg, such as avidin, ovalbumin, conalbumin or lysozyme, or a soy protein, or several of these simultaneously.

According to one embodiment, a separate emulsifier can also be used. When producing vegan products, for example lecithin can be used.

According to a preferred embodiment, the biomaterial and the protein comprised in the food fat component are specifically derived from different sources. According to one embodiment the biomaterial may also comprise protein and fat, but in that case use is preferably also made of another additional protein source.

According to a preferred embodiment the biomaterial other than the main protein source is carbohydrate-based.

According to a preferred embodiment the oil fat contained in the food fat component contains antioxidants. Antioxidants can, however, be added separately, as well as other oxidation-preventing additives. As additives, use can be made of some vitamins and trace element, such as vitamin E or C, selenium or L-tartaric acid, for example.

The present invention also relates to a product in which the food fat component according to the invention has been utilized. The product is typically a food or cosmetic product, or a medicament. The food fat component can be added to the mixture or it can be used to partly or completely replace a typically used fat-, protein- or carbohydrate-based ingredient. The food fat component described by the invention can also be used as an independent ingredient in the above-mentioned applications, for example in breading or flavoring foods.

In one embodiment the food fat component according to the invention comprises in total 1 to 90 weight-% oil fat, protein and biomaterial. The product typically has 10 to 70 weight-%, preferably 10 to 60 weight-% both oil fat and biomaterial, and typically 2 to 60 weight-%, preferably 2 to 50 weight-% protein. The amount of protein affects, besides mouthfeel, taste and nutritional values, among other things the roast color of the product. The roast color becomes more intense with increasing amount of protein.

According to a preferred embodiment the use of the product of the invention involves baking or heating the product in a manner that the Maillard reaction will occur.

According to one embodiment the food fat component or product according to the invention can be used as carrier matrix for different ingredients.

In the method according to the invention, a fat phase and salt are added into water to a water content of 20 to 80 weight-%, preferably 30 to 70 weight-%, and the mixture thus obtained is stirred at below 60°C, preferably below 50 °C, for less than 10 min. At the latest as a result of this heating the fat used will be in an oil-like form and an oil-in-water mixture has formed in which the fatty acids are dispersed in the aqueous phase. Protein is added to the mixture, and mechanical stirring is then continued. At the final stage, intense homogenizing treatment is applied for less than 10 min, preferably less than 3 min, until the mixture consists of a homogenous phase or phases. The protein is added at a temperature below 100 °C, preferably 0 to 70 °C, depending on the protein source. When necessary, an electrolyte, typically salts, can additionally be added to the mixture. This phase/these phases constitute the first part of the food fat component according to the invention. Homogenization of the mixture is carried out by a commonly known mechanical method which is compatible with the viscosity of the desired mixture. Homogenization is preferably carried out with mechanically cutting blades.

In the next step the mixture is combined with other biomaterial, from which the food fat component according to the invention is obtained. Combining takes place by generally known mechanical treatments such as grinding, mixing, high pressure treatment, cutting treatment or a combination of these. The biomaterial must be hygienically clean and fulfill the requirements of generally acceptable standards. As the final result, a homogenous mass, mixture or suspension is obtained.

According to one embodiment the resulting mass, mixture or suspension is dehydrated by generally known and applicable processing methods (e.g. freeze-drying or vacuum drying), preferably by heat treatment. The heat treatment takes place typically at below 250 °C for a time of less than 45 min, depending on the viscosity of the mixture and the volume of the mixture to be processed. According to an another alternative the mass, mixture or suspension is dehydrated at below 100 °C, in which case longer (from 5 hours up to 48 hours) dehydration times are used, for example about 24 h. Dehydration enables the amount of water to be reduced in the product and the preservability of the product thus improved. Typically the moisture, *i.e.* water content of the dehydrated product is about 0.1 to 15 weight-%, depending on the drying conditions. As a result of the treatment the physical, chemical and/or organoleptically observed properties of the prepared product may change according to the pressure and temperature applied in the method.

According to a preferred embodiment the resulting mass, mixture or suspension is dehydrated as a thin layer, particularly when using heat treatment. The thickness of the layer to be dehydrated is preferably less than 10 mm, for example about 2 to 8 mm, preferably about 5 to 6 mm.

According to one embodiment dehydration takes place through drying the mass, mixture or suspension *e.g.* by freeze-drying, vacuum drying or heat treatment at low temperatures.

According to another embodiment dehydration takes place through baking the mass, mixture or suspension by heat treatment.

Adjustment of pH is possible during the production process. Since pH is of great importance as regards the functioning of proteins, it can be used to influence the behavior of proteins. At a favorable pH the functional capacity of proteins is highest, whereby they effectively bind fatty acids into small particles, preventing their oxidation. Adjustment of pH thus allows one to have an influence on the degree of oxidation of fatty acids and further on the nutritional profile of the product. For most proteins, the favorable functional pH is approximately 7 to 8.

As mentioned above, according to one embodiment it is possible to add various additional components, such as antioxidants and vitamins (tocopherols, vitamins A, D, E) into the product. The additional components can be components that improve the quality or healthiness of the products. Possible added ingredients include also various spices, aromas or flavorings. The components being added at the mixing stage may also be components reacting chemically with amino acids, forming physicochemical linkages or being based on close-range forces (van der Waals).

According to a preferred embodiment, the components optionally being added to the mixture at the mixing stage are oil-soluble.

The following non-limiting examples represent applications of the present technology.

### EXAMPLES

### Example 1 - Production of food fat component according to the present invention

In a method according to the invention, 40 weight-% of rapeseed oil and 0.5 weight-% salt were added into water. The mixture was stirred at a temperature of 30 °C. 30 weight-% egg was added to the oil-in-water mixture and at the end of stirring intense mechanical mixing was applied until the mixture was homogenous. Starch was mixed with the homogenized mixture, after which the mass was heated at about 60 degrees for about 24 h until the mass exhibited a suitable dryness.

### Example 2 - Use of component according to the present invention in a product

Component produced by the method was added to a hamburger patty, and oxidation was monitored by measuring the peroxide values of the samples in a study where an ordinary hamburger patty was compared with patties to which the component was added at 10 and 20 weight-%, respectively. The hamburger patties were fried on a griddle equipped with an optical cooker. Based on oxidation, the patty containing 10 weight-% component oxidized 100 % less and the patty containing 20 weight-% component 57 % less than the reference patty.

The effect of the component on the freshness of a bread roll was tested by adding it in an amount of about 15 % to the roll dough and comparing it with a conventional bread roll. 80 % of the assessors felt the component-containing bread roll softer than the conventional roll after two days' storage at room temperature.

In two organoleptic assessments (table 1) hamburger patties with 10 weight-% added fat component (OFA) were found to be 20 to 60 % better in appearance and 23 to 76 % better in succulence than the conventionally produced patties (control I). The patty with 10 weight-% component (OFA) was also found to have a 14 to 30 % better texture than control II (the same ingredients as in component, but added separately). In organoleptic tests, addition of the corresponding materials component by component resulted in greasy taste and mouthfeel, forming a greasy film into the mouth as an aftertaste. Hamburger patties were used in the tests, since due to temperature and frying plates creating pressure on both sides, frying on a griddle is especially disadvantageous with regard to oxidation.

**Table 1. Results of organoleptic assessments of hamburger patties.**

| Organoleptic assessment I | Appearance | Flavor | Texture | Taste | Succulence |
|---|---|---|---|---|---|
| Control I | 3.13 | 3.31 | 3 | 3.31 | 2.21 |
| Control II | 3.48 | 3.16 | 2.75 | 2.88 | 3.19 |
| OFA 10 % | 3.75 | 3.5 | 3.13 | 3.13 | 3.88 |

| Organoleptic assessment II | Appearance | Flavor | Texture | Taste | Succulence |
|---|---|---|---|---|---|
| Control I | 2.35 | 2.85 | 2.95 | 2.55 | 2.8 |
| Control II | 3.2 | 3.05 | 2.75 | 3.1 | 2.95 |
| OFA 10 % | 3.75 | 3.45 | 3.85 | 3.8 | 3.45 |

On spectrophotometric color analysis the color of the hamburger patty containing 10 % component was found to be 17 % darker and 29 % more red than the color of an ordinary patty.

### Industrial applicability

The present invention can be used in general to prepare a food fat component and a product according to the invention.

In particular, the present invention is suitable for preventing oxidation of unsaturated fatty acids during processing and storage of products. Thus, the food fat component is generally suitable for use in the manufacture of food products, thereby improving their health-related and organoleptic properties.

As practical examples within the food industry, mention can be made of the following applications: seasoning mixtures, stuffings, various processed products, liquids, sauces, and foods containing fat and starch as ingredients. Examples of applications include the improvement of succulence and preservability of various types of fat-based laminated doughs, succulence and fat profile of hamburger patties, texture and mouthfeel of chocolate mass, and taste and succulence of meat-rice stuffings of meat pasties.

In addition to the food industry, the present invention can also be utilized, for example, in pharmaceutical and cosmetic formulations.

### List of reference publications

### Patent literature

WO2016133411 (A1)
RU2557526 (C1)
CN102742674 (A)
FI119751

### Other literature

Carneiro HCF, Tonon RV, Grosso CRF, Hubinger MD. Encapsulation efficiency and oxidative stability of flaxseed oil microencapsulated by spray drying using different combinations of wall materials. J Food Eng 2013, 115, 4, 443-451.
Csallany A Saari, Han I, Shoeman DW, Chen C, Yuan J. 4-Hydroxynonenal (HNE), a toxic aldehyde in French fries from fast food restaurants. J Am Oil Chem Soc, 2015, 92, 10, 1413-1419, Springer.
Frankel EN. Lipid Oxidation. 2012. 2. edition. Woolhead Publishing Limited, UK. 488 s.
Jimenez M, Garcia HS, Beristain CI. Spray-drying microencapsulation and oxidative stability of conjugated linoleic acid. Eur Food Res Tech, 2004, 219, 6, 588-592.
Kagami Y, Sugimura S, Fujishima N, Matsuda K, Kometani T, Matsumura, Y. Oxidative stability, structure and physical characteristics of microcapsules formed by spray drying of fish oil with protein and dextrin wall materials. J Food Sci, 2003, 68, 2248-2255.
Laine P, Toppinen E, Kivelä R, Taavitsainen VM, Knuutila O, Sontag-Strohm T, Jouppila K, Loponen J. Emulsion preparation with modified oat bran: Optimization of the emulsification process for microencapsulation purposes. J Food Eng. 2011, 104, 4, 538-547.
Li D, Saldeen T, Romeo F, Mehta JL. Relative effects of α-and γ-tocopherol on low-density lipoprotein oxidation and superoxide dismutase and nitric oxide synthase activity and protein expression in rats. J. Cardiovasc.Pharmacol.Ther., 1999, 4, 4, 219-226, Sage Publications Sage CA: Thousand Oaks, CA.
Saldeen T, Li D, Mehta JL. Differential effects of α- and γ-tocopherol on low-density lipoprotein oxidation, superoxide activity, platelet aggregation and arterial thrombogenesis. J Am Coll Cardiol., 1999, 34, 4, 1208-1215.
Santipanichwong R, Suphantharika M. Influence of different β-glucans on the physical and rheological properties of egg yolk stabilized oil-in-water emulsions. Food Hydrocoll, 2009, 23, 5, 1279-1287
Shahidi H, Han XQ. Encapsulation of food ingredients. Crit.Rev.Food Sci.Nutr., 1993, 33, 6, 501-547, Taylor & Francis.
U.S. Department of Health and Human Services and U.S. Department of Agriculture. 2015-2020 Dietary Guidelines for Americans. 8th Edition. 2015.
Velasco J, Holgado F, Dobarganes C, Márquez-Ruiz G. Influence of relative humidity on oxidation of the free and encapsulated oil fractions in freeze-dried microencapsulated oils. Food Res Int, 2009, 42, 10, 1492-1500.
Wasowicz E, Gramza A, Hes M. Oxidation of lipids. Pol J Food Nutr Sci. 2004 vol 13/54 SI 1 s. 87-100.
Watanabe Y, Fang X, Minemoto Y, Adachi S, Matsuno R. Suppressive Effect of Saturated Acyl 1-Ascorbate on the Oxidation of Linoleic Acid Encapsulated with Maltodextrin or Gum Arabic by Spray-Drying. J Agr Food Chem 2002 50 (14), 3984-3987.

## Claims

1. Food fat component, which is capable of preventing oxidation of fatty acids and improving the appearance and/or succulence and/or nutritional value of a product comprising it, **characterized in that** it comprises 10 to 70 weight-% oil fat, having 1 to 40 weight-% protein and 10 to 70 weight-% carbohydrate-based biomaterial added thereto, and having a moisture of 0.1 to 15 weight-%.

2. The food fat component according to claim 1, further comprising electrolytes, such as salts.

3. The food fat component according to claim 1 or 2, wherein the oil fat is vegetable fat or oil, such as rapeseed or palm oil, shea butter, or a combination of two or more of these fats.

4. The food fat component according to any one of claims 1 to 3, wherein the protein is a protein derived from living organisms, preferably some of the proteins contained in egg, such as avidin, ovalbumin, conalbumin or lysozyme, or a soy protein, or several of these simultaneously.

5. The food fat component according to any one of claims 1 to 4, wherein the biomaterial is cereal flour, semolina or flakes, preferably wheat, barley, rye, oats, spelt, millet, maize, rice or sorghum; pseudocereal flours, semolina or flakes, preferably buckwheat, amaranth or quinoa; legumes, preferably soybeans, peas, chickpeas, beans, lentils, or lupines.

6. The food fat component according to any one of claims 1 to 5, the oil fat of which comprises antioxidants.

7. Food fat component according to any one of claims 1 to 6, having added thereto antioxidants or other additives preventing oxidation, such as vitamins or trace elements.

8. A product comprising the food fat component according to any one of claims 1 to 7.

9. The product according to claim 8, comprising 1 to 80 weight-% oil fat, preferably 1 to 30 weight-%.

10. The product according to claim 8 or 9, comprising 1 to 30 weight-% protein.

11. The product according to any one of claims 8 to 10, comprising 35 to 70 weight-% carbohydrate-based biomaterial.

12. Use of food fat component according to any one of claims 1 to 7 in a food, pharmaceutical or cosmetic formulation.

13. The use according to claim 12, wherein a product according to any one of claims 1 to 7 is cooked or heated so that Maillard reaction will occur.

14. The use of food fat component according to any one of claims 1 to 7 as carrier matrix.

15. A method for the production of the food fat component according to any one of claims 1 to 7, **characterized in that** it comprises the mechanical treatments in which fat, protein, water, biomaterials and optional electrolytes are blended into a homogenous mixture.

16. The method according to claim 15, wherein at the first stage a water-fat mixture is formed having a water content of 20 to 80 weight-%, preferably 30 to 70 weight-%.

17. The method according to claim 15 or 16, wherein the water-fat mixture formed in blending is stirred at a temperature below 60 °C.

18. The method according to any one of claims 15 to 17, wherein protein is added to the water-fat mixture formed in blending at a temperature below 100 °C, preferably 0 to 70 °C.

19. The method according to any one of claims 15 to 18, wherein the homogenous mixture obtained is combined with another biomaterial.

20. The method according to any one of claims 15 to 18, wherein the formed homogenous mixture or suspension is dehydrated, preferably by heat treatment.
